# EUROPEAN PATENT APPLICATION

(11) **EP 4 813 769 A1**
(43) Date of publication of application: **30.09.2026**
(21) Application number: 26166826.3
(22) Date of filing: 23.03.2026
(51) Int. Cl.: B60T 8/172, B60W 40/105

(54) **METHOD AND DEVICE FOR ESTIMATING VEHICLE SPEED, CONTROLLER, STORAGE MEDIUM, AND VEHICLE**

(30) Priority: 24.03.2025 CN 202510349369
(71) Applicant: Finest Transmission System (Jiangsu) Co., Ltd., Zhenjiang, Jiangsu 212200 (CN)
(72) Inventor: LIU, Fang, Zhenjiang, 212200 (CN); LIU, Xinqiang, Zhenjiang, 212200 (CN)
(74) Representative: Murgitroyd & Company

(57) **Abstract**

A method for estimating a vehicle speed includes: determining whether a front axle and a rear axle of a vehicle are in a slipping state at a current moment; calculating, if both the front axle and the rear axle are in the slipping state at the current moment, a first estimated vehicle speed value; calculating, if one of the front axle and the rear axle is in the slipping state at the current moment, and a difference between a front axle speed and a rear axle speed is greater than a preset threshold, a second estimated vehicle speed value; selecting a less value between the front axle speed and the rear axle speed as a third estimated vehicle speed value; and determining a reference vehicle speed at the current moment based on the above three estimated vehicle speed values. The method may improve accuracy of a vehicle speed estimation.

## Description

### TECHNICAL FIELD

The present application relates to the field of vehicle control technologies, and in particular, to a method and a device for estimating a vehicle speed, a controller, a storage medium, and a vehicle.

### BACKGROUND

In a modern automotive active safety control system, a traction control system (TCS) suppresses wheel slip by adjusting an output torque of a driving wheel, playing a key role in ensuring driving stability of a vehicle on a low-adhesion road surface. One core control parameter of the system is slip ratio. The slip ratio is calculated by a formula: $s = \frac{{v}_{w} - {v}_{r}}{{v}_{w}} \times 100 %$. *v_{w}* is a wheel speed. *vᵣ* is a vehicle body reference speed. Accurately obtaining the vehicle body reference speed is a prerequisite for achieving precise slip ratio control.

However, limited by a cost of sensor arrangement and technical feasibility, the vehicle body reference speed usually can not be obtained through direct measurement and needs to be estimated indirectly based on a wheel speed signal, a longitudinal acceleration, and the like. Currently, mainstream methods for estimating a vehicle speed include following methods.

An extreme wheel speed method includes a step of selecting a maximum value or a minimum value between driving wheel speeds as a reference vehicle speed. Although the method is simple in calculation, an extreme wheel speed has a large deviation from an actual vehicle speed under a condition in which multiple wheels slip simultaneously.

A mean filtering method includes a step of processing multi-wheel speed data through weighted averaging or low-pass filtering. When 3 or 4 wheels slip synchronously, filtered data significantly deviates from the actual vehicle speed.

A dynamic model method includes a step of performing estimation based on models of a whole vehicle, tires, and the like. The method has poor adaptability to different road surfaces due to the influence of the accuracy of the adopted models.

It can be learned that the methods for estimating the vehicle speed in the conventional technology suffer from poor estimation accuracy and inaccurate reference vehicle speed estimation.

### SUMMARY

The present application provides a method and a device for estimating a vehicle speed, a controller, a storage medium, and a vehicle, to solve a problem of poor vehicle speed estimation accuracy in the conventional technology.

In a first aspect, an embodiment of the present application provides a method for estimating a vehicle speed, including:
determining whether a front axle of a vehicle and a rear axle of the vehicle are in a slipping state at a current moment;
calculating, if both the front axle of the vehicle and the rear axle of the vehicle are in the slipping state at the current moment, a first estimated vehicle speed value based on a vehicle speed before the slipping state and a current vehicle body acceleration;
calculating, if one of the front axle of the vehicle and the rear axle of the vehicle is in the slipping state at the current moment, and a difference between a front axle speed and a rear axle speed is greater than a preset threshold, a second estimated vehicle speed value based on the front axle speed, the rear axle speed, and the current vehicle body acceleration;
selecting a less value between the front axle speed and the rear axle speed of the vehicle at the current moment as a third estimated vehicle speed value; and
determining a reference vehicle speed of the vehicle at the current moment based on the first estimated vehicle speed value, the second estimated vehicle speed value, and the third estimated vehicle speed value.

The method may distinguish a speed-separation slipping scenario and a dual-axle slipping scenario. Different calculation rules can be selected to estimate the vehicle speed under different slipping scenarios, thereby avoiding a problem that a traditional method such as the extreme value method and the mean method can not handle a complex condition. Simultaneously, acceleration integration is introduced to correct vehicle speed changes during slipping, so that overestimation or underestimation of speed caused by slipping is reduced, and accuracy of vehicle speed estimation is improved.

In a possible implementation, the determining whether a front axle of a vehicle and a rear axle of the vehicle are in a slipping state at a current moment, includes:
acquiring the front axle speed at the current moment, and deriving the front axle speed at the current moment to obtain a front axle acceleration;
acquiring the rear axle speed at the current moment, and deriving the rear axle speed at the current moment to obtain a rear axle acceleration;
determining, if the front axle acceleration is greater than a calibrated acceleration value, the front axle to be in the slipping state; and
determining, if the rear axle acceleration is greater than the calibrated acceleration value, the rear axle to be in the slipping state.

According to the foregoing embodiment, compared with a method of determining slip based on a vehicle speed threshold, a method of determining slip based on accelerations provided in the embodiment can capture a slip timing more accurately, thereby improving the accuracy of vehicle speed estimation.

In a possible implementation, the calculating a first estimated vehicle speed value based on a vehicle speed before the slipping state and a current vehicle body acceleration, includes:
taking a front axle speed at a moment before both the front axle and the rear axle are simultaneously detected to enter the slipping state as a current front axle speed;
taking a rear axle speed at the moment before both the front axle and the rear axle are simultaneously detected to enter the slipping state as a current rear axle speed;
selecting a less value between the current front axle speed and the current rear axle speed as a target vehicle speed;
integrating the current vehicle body acceleration over a first preset duration to obtain a first cumulative change speed; wherein the first preset duration is a time interval between the current moment and a moment at which both the front axle and the rear axle are simultaneously detected to enter the slipping state; and
adding the target vehicle speed and the first cumulative change speed to obtain the first estimated vehicle speed value.

According to the foregoing embodiment, since a stable wheel speed before slipping corresponds more closely to an actual vehicle speed, when both the front axle and the rear axle are determined to be in the slipping state, the front axle speed and the rear axle speed at the moment immediately before a moment when both the front axle and the rear axle are determined to be in the slipping state can be locked. A large deviation in speed estimation caused by selecting an artificially high wheel speed due to slip is avoided. At the same time, integrating a current vehicle body acceleration allows real-time adjustment of a vehicle speed during the slipping state, further improving the accuracy of vehicle speed estimation.

In a possible implementation, the calculating a second estimated vehicle speed value based on the front axle speed, the rear axle speed, and the current vehicle body acceleration, includes:
taking a front axle speed at a moment before the vehicle enters a speed-separation slipping condition as a current front axle speed; wherein the speed-separation slipping condition is a condition in which one of the front axle and the rear axle is in the slipping state at the current moment, and the difference between the front axle speed and the rear axle speed is greater than the preset threshold;
taking a rear axle speed at the moment before the vehicle enters the speed-separation slipping condition as a current rear axle speed;
averaging the current front axle speed and the current rear axle speed to obtain a current average vehicle speed;
integrating the current vehicle body acceleration over a second preset duration to obtain a second cumulative change speed; wherein the second preset duration is a time interval between the current moment and a moment at which one of the front axle and the rear axle is detected to enter the slipping state; and
adding the current average vehicle speed and the second cumulative change speed to obtain the second estimated vehicle speed value.

According to the foregoing embodiment, for a condition of speed-separation slipping where a speed separation occurs, when at least one of the front axle and the rear axle is determined to be in the slipping state, the front axle speed and the rear axle speed at the moment immediately before a moment when at least one of the front axle and the rear axle are determined to be in the slipping state can be locked. A large deviation caused by selecting an artificially high wheel speed after slip is avoided. Furthermore, since speed separation occurs under the condition, an extreme value deviation caused by speed-separation slipping is eliminated by using the average vehicle speed. Integrating the current vehicle body acceleration allows real-time adjustment of the vehicle speed during the slipping state, further improving the accuracy of vehicle speed estimation.

In a possible implementation, the calculating, if both the front axle of the vehicle and the rear axle of the vehicle are in the slipping state at the current moment, a first estimated vehicle speed value based on a vehicle speed before the slipping state and a current vehicle body acceleration, includes:
calculating, if both the front axle of the vehicle and the rear axle of the vehicle are in the slipping state at the current moment, the first estimated vehicle speed value based on the vehicle speed before the slipping state and the current vehicle body acceleration, otherwise, taking a first preset speed as the first estimated vehicle speed value; wherein the first preset speed is greater than an upper speed limit of the vehicle; and
the calculating, if one of the front axle of the vehicle and the rear axle of the vehicle is in the slipping state at the current moment, and a difference between a front axle speed and a rear axle speed is greater than a preset threshold, a second estimated vehicle speed value based on the front axle speed, the rear axle speed, and the current vehicle body acceleration, includes:
calculating, if one of the front axle of the vehicle and the rear axle of the vehicle is in the slipping state at the current moment, and the difference between the front axle speed and the rear axle speed is greater than the preset threshold, the second estimated vehicle speed value based on the front axle speed, the rear axle speed, and the current vehicle body acceleration, otherwise, taking a second preset speed as the second estimated vehicle speed value; wherein the second preset speed is greater than the upper speed limit of the vehicle.

The foregoing embodiment provides a protection mechanism for the dual-axle condition and the speed-separation slipping condition. When the condition requirements are not met, the corresponding estimated value is set as an invalid value, avoiding wrong application of compensation algorithm under a non-slipping condition. Meanwhile, invalidation can avoid a conflict with an actual wheel speed, effectively improve system reliability and reduce an accident risk caused by algorithm failure.

In a possible implementation, the determining a reference vehicle speed of the vehicle at the current moment based on the first estimated vehicle speed value, the second estimated vehicle speed value, and the third estimated vehicle speed value, includes:
selecting a minimum value among the first estimated vehicle speed value, the second estimated vehicle speed value, and the third estimated vehicle speed value as the reference vehicle speed of the vehicle at the current moment.

According to the foregoing embodiment, to meet a safety priority strategy of a TCS, the minimum value of the three estimation results is finally taken as an estimated vehicle speed value, avoiding distortion of slip ratio calculation caused by overestimation of vehicle speed and enhancing system safety.

In a second aspect, an embodiment of the present application provides a device for estimating a vehicle speed, including:
a slipping state determination module, configured to determine whether a front axle of a vehicle and a rear axle of the vehicle are in a slipping state at a current moment;
a first vehicle speed estimation module, configured to calculate, if both the front axle of the vehicle and the rear axle of the vehicle are in the slipping state at the current moment, a first estimated vehicle speed value based on a vehicle speed before the slipping state and a current vehicle body acceleration;
a second vehicle speed estimation module, configured to calculate, if one of the front axle of the vehicle and the rear axle of the vehicle is in the slipping state at the current moment, and a difference between a front axle speed and a rear axle speed is greater than a preset threshold, a second estimated vehicle speed value based on the front axle speed, the rear axle speed, and the current vehicle body acceleration;
a third vehicle speed estimation module, configured to select a less value between the front axle speed and the rear axle speed of the vehicle at the current moment as a third estimated vehicle speed value; and
a reference vehicle speed determination module, configured to determine a reference vehicle speed of the vehicle at the current moment based on the first estimated vehicle speed value, the second estimated vehicle speed value, and the third estimated vehicle speed value.

In a possible implementation, the slipping state determination module is further configured to
acquire the front axle speed at the current moment, and deriving the front axle speed at the current moment to obtain a front axle acceleration;
acquire the rear axle speed at the current moment, and deriving the rear axle speed at the current moment to obtain a rear axle acceleration;
determine, if the front axle acceleration is greater than a calibrated acceleration value, the front axle to be in the slipping state; and
determine, if the rear axle acceleration is greater than the calibrated acceleration value, the rear axle to be in the slipping state.

In a possible implementation, the first vehicle speed estimation module is further configured to
take a front axle speed at a moment before both the front axle and the rear axle are simultaneously detected to enter the slipping state as a current front axle speed;
take a rear axle speed at the moment before both the front axle and the rear axle are simultaneously detected to enter the slipping state as a current rear axle speed;
select a less value between the current front axle speed and the current rear axle speed as a target vehicle speed;
integrate the current vehicle body acceleration over a first preset duration to obtain a first cumulative change speed; wherein the first preset duration is a time interval between the current moment and a moment at which both the front axle and the rear axle are simultaneously detected to enter the slipping state; and
add the target vehicle speed and the first cumulative change speed to obtain the first estimated vehicle speed value.

In a possible implementation, the second vehicle speed estimation module is further configured to
take a front axle speed at a moment before the vehicle enters a speed-separation slipping condition as a current front axle speed; wherein the speed-separation slipping condition is a condition in which one of the front axle and the rear axle is in the slipping state at the current moment, and the difference between the front axle speed and the rear axle speed is greater than the preset threshold;
take a rear axle speed at the moment before the vehicle enters the speed-separation slipping condition as a current rear axle speed;
average the current front axle speed and the current rear axle speed to obtain a current average vehicle speed;
integrate the current vehicle body acceleration over a second preset duration to obtain a second cumulative change speed; wherein the second preset duration is a time interval between the current moment and a moment at which one of the front axle and the rear axle is detected to enter the slipping state; and
add the current average vehicle speed and the second cumulative change speed to obtain the second estimated vehicle speed value.

In a possible implementation, the first vehicle speed estimation module is further configured to
calculate, if both the front axle of the vehicle and the rear axle of the vehicle are in the slipping state at the current moment, the first estimated vehicle speed value based on the vehicle speed before the slipping state and the current vehicle body acceleration, otherwise, taking a first preset speed as the first estimated vehicle speed value; wherein the first preset speed is greater than an upper speed limit of the vehicle; and
the second vehicle speed estimation module is further configured to
calculate, if one of the front axle of the vehicle and the rear axle of the vehicle is in the slipping state at the current moment, and the difference between the front axle speed and the rear axle speed is greater than the preset threshold, the second estimated vehicle speed value based on the front axle speed, the rear axle speed, and the current vehicle body acceleration, otherwise, taking a second preset speed as the second estimated vehicle speed value; wherein the second preset speed is greater than the upper speed limit of the vehicle.

In a possible implementation, the reference vehicle speed determination module is further configured to
select a minimum value among the first estimated vehicle speed value, the second estimated vehicle speed value, and the third estimated vehicle speed value as the reference vehicle speed of the vehicle at the current moment.

In a third aspect, an embodiment of the present application provides a controller, including a memory, a processor, and a computer program stored in the memory and executable on the processor, wherein when the processor executes the computer program, steps of the method for estimating the vehicle speed according to any possible implementation of the first aspect are implemented.

In a fourth aspect, an embodiment of the present application provides a computer-readable storage medium, storing a computer program, wherein when the computer program is executed by a processor, steps of the method for estimating the vehicle speed according to any possible implementation of the first aspect are implemented.

In a fifth aspect, an embodiment of the present application provides a vehicle, including the controller according to the third aspect.

### BRIEF DESCRIPTION OF THE DRAWINGS

To explain technical solutions in the embodiments of the present application more clearly, following briefly introduces drawings required for use in the embodiments or the description of the prior art. Obviously, the drawings in the following description are only some embodiments of the present application. For those of ordinary skill in the art, other drawings can be obtained based on the drawings without creative effort.
FIG. 1 is a flow chart of a method for estimating a vehicle speed according to an embodiment of the present application.
FIG. 2 is a schematic structural diagram of a device for estimating a vehicle speed according to an embodiment of the present application.
FIG. 3 is a schematic diagram of a controller according to an embodiment of the present application.

### DETAILED DESCRIPTIONS OF THE EMBODIMENTS

In the following description, for a purpose of illustration rather than limitation, specific details such as a specific system structure and technique are set forth in order to provide a thorough understanding of the embodiments of the present application. However, it should be clear to those skilled in the art that the present application may further be implemented in other embodiments without these specific details. In other instances, detailed descriptions of well-known systems, devices, circuits, and methods are omitted to avoid unnecessary detail obscuring the description of the present application.

To make an objective, a technical solution, and an advantage of the present application clearer, the following describes the present application in detail with reference to the accompanying drawings through specific embodiments.

Slip ratio is an important parameter for measuring a sliding degree of a tire during movement, and usually used to describe an interaction between the tire and a road surface when a vehicle brakes or accelerates. During acceleration, a large slip ratio indicates wheel slip. During braking, a small slip ratio indicates wheel lock. Correspondingly, a TCS suppresses wheel slip or lock by adjusting an output torque of a driving wheel, playing a key role in ensuring driving stability of a vehicle on a low-adhesion road surface.

To ensure accurate calculation of the slip ratio and avoid decrease of vehicle driving performance caused by incorrect adjustment of the output torque by the TCS due to inaccurate slip ratio, a vehicle body reference speed needs to be estimated accurately. However, the vehicle body reference speed is usually estimated indirectly based on a wheel speed signal, using methods such as an extreme wheel speed method and a mean filtering method. However, there are various wheel slipping conditions. When dual-axle slipping or speed-separation slipping occurs, the above estimation result may have a significant deviation.

To address the above problem, an embodiment provides a method for estimating a vehicle speed. The method distinguishes between speed-separation slipping condition, dual-axle slipping condition, and non-slipping condition, and sets different speed estimation rules for each condition, thereby avoiding a problem that a traditional method such as the extreme value method and the mean method can not handle a complex condition, and improving accuracy of vehicle speed estimation.

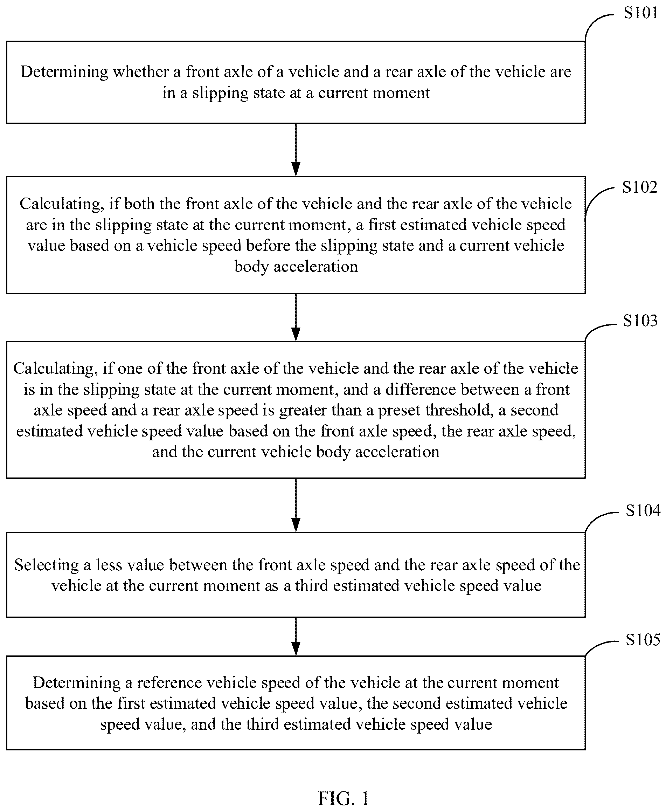

Referring to FIG. 1, FIG. 1 shows a flow chart of an implementation of a method for estimating a vehicle speed according to an embodiment of the present application. The details are as follows:
S101: Determining whether a front axle of a vehicle and a rear axle of the vehicle are in a slipping state at a current moment.

An executing subject of the embodiment may be a controller. The controller may be a vehicle-mounted controller, an off-vehicle controller, or a combination of the vehicle-mounted controller and the off-vehicle controller. The type of the controller may be selected according to an actual requirement. In the embodiment, the executing subject may be a vehicle-mounted controller, such as a motor controller.

Exemplarily, a specific implementation process for determining whether the front axle of the vehicle is in the slipping state at the current moment includes: obtaining a reference vehicle speed at a previous moment; obtaining a front axle speed at the current moment; determining, if a difference between the reference vehicle speed at the previous moment and the front axle speed at the current moment is greater than a preset difference, the front axle to be in the slipping state.

The front axle speed may be obtained by converting a motor speed corresponding to the front axle. Alternatively, a left wheel speed and a right wheel speed is obtained based on wheel speed sensors of a left wheel and a right wheel of the front axle, the left wheel speed and the right wheel speed are averaged, an average of the left wheel speed and the right wheel speed of the front axle is converted to an average moving speed of the left wheel and the right wheel, and the front axle speed is obtained.

Exemplarily, a specific implementation process for determining whether the rear axle of the vehicle is in the slipping state at the current moment includes: obtaining a reference vehicle speed at a previous moment; obtaining a rear axle speed at the current moment; determining, if a difference between the reference vehicle speed at the previous moment and the rear axle speed at the current moment is greater than a preset difference, the rear axle to be in the slipping state.

The rear axle speed may be obtained by converting a motor speed corresponding to the rear axle. Alternatively, a left wheel speed and a right wheel speed is obtained based on wheel speed sensors of a left wheel and a right wheel of the rear axle, the left wheel speed and the right wheel speed are averaged, an average of the left wheel speed and the right wheel speed of the rear axle is converted to an average moving speed of the left wheel and the right wheel, and the rear axle speed is obtained.

In the embodiment, to avoid interference of an accidental acquisition error of the sensor on a subsequent determination process of the slipping state, only when both the front axle and the rear axle are detected to be in the slipping state for N consecutive moments, the front axle and the rear axle may finally be determined to be in the slipping state, and a vehicle speed estimation condition is changed to a dual-axle slipping condition. A value range of N may be 2 to 4.

S102: Calculating, if both the front axle of the vehicle and the rear axle of the vehicle are in the slipping state at the current moment, a first estimated vehicle speed value based on a vehicle speed before the slipping state and a current vehicle body acceleration.

In the embodiment, when both the front axle and the rear axle of the wheels are in the slipping state, the vehicle speed obtained by converting the wheel speed is artificially high and unreliable. Therefore, during a period when both the front axle and the rear axle are in the slipping state, a motor controller may freeze a reference vehicle speed at a moment immediately before the front axle and the rear axle both enter the dual-axle slipping condition, and then acquire the vehicle body acceleration collected by an acceleration sensor sent by an electronic stability control (ESC). Real-time integration is performed on the vehicle body acceleration starting from a moment of entering the dual-axle slipping condition, with an integration formula: Δ*v* = *∫ a*(*t*)*dt.* Then, the reference vehicle speed at the moment immediately before the dual-axle slipping condition is entered is added to an integral of the vehicle body acceleration to obtain the first estimated vehicle speed value.

The method can avoid a large deviation in vehicle speed estimation caused by selecting an artificially high wheel speed due to slip. Meanwhile, integrating the current vehicle body acceleration allows real-time adjustment of the vehicle speed during the slipping state, further improving the accuracy of vehicle speed estimation. In the formula, *a* represents a vehicle body acceleration, and Δ*v* represents a cumulative change speed value after the slipping state is entered.

Exemplarily, after a vehicle body acceleration signal collected by the acceleration sensor sent by the ESC is acquired, low-pass filtering may be performed on the acceleration signal.

S103: Calculating, if one of the front axle of the vehicle and the rear axle of the vehicle is in the slipping state at the current moment, and a difference between a front axle speed and a rear axle speed is greater than a preset threshold, a second estimated vehicle speed value based on the front axle speed, the rear axle speed, and the current vehicle body acceleration.

In the embodiment, when one of the front axle and the rear axle is in the slipping state and speed separation occurs between the front axle and the rear axle, using an extreme value method may cause an estimated vehicle speed to deviate from an actual vehicle speed value. Therefore, when one of the front axle and the rear axle is in the slipping state and the difference between the front axle speed and the rear axle speed is greater than the preset threshold, the wheels are determined to enter a speed-separation slipping condition. The motor controller may freeze a reference vehicle speed at a moment immediately before the speed-separation slipping condition is entered, and then acquire the vehicle body acceleration collected by the acceleration sensor sent by the ESC. Real-time integration is performed on the vehicle body acceleration starting from a moment of entering the speed-separation slipping condition, with an integration formula: Δ*v =* ∫ *a*(*t*)*dt.* Then, the second estimated vehicle speed value is obtained based on the front axle speed, the rear axle speed and the cumulative change speed value. The method can avoid a vehicle speed error when the extreme value method is used to estimate the vehicle speed under the speed-separation slipping condition, further improving the accuracy of vehicle speed estimation. In the formula, *a* represents a vehicle body acceleration, and Δ*v* represents a cumulative change speed value after the slipping state is entered.

In addition, the above speed-separation slipping condition can avoid a problem that a final second estimated vehicle speed value is too low when a reference vehicle speed at a moment immediately before slipping, calculated by using the extreme value method under a condition of dual-axle slipping with speed separation, is used as an initial reference vehicle speed for entering the speed-separation slipping condition, thereby improving the accuracy of vehicle speed estimation.

S104: Selecting a less value between the front axle speed and the rear axle speed of the vehicle at the current moment as a third estimated vehicle speed value.

When no wheel is in the slipping state, or a wheel of a single axle is in the slipping state but no speed separation occurs, a reference vehicle speed determined by using the extreme value method may accurately reflect the actual vehicle speed. Therefore, while the above two vehicle speed estimation processes are executed, the motor controller further executes a third vehicle speed estimation path, that is, calculates the vehicle speed by using the extreme value method, so that the motor controller outputs the third estimated vehicle speed value as a reference vehicle speed when a single axle slips without speed separation or both the front axle and the rear axle do not slip.

S105: Determining a reference vehicle speed of the vehicle at the current moment based on the first estimated vehicle speed value, the second estimated vehicle speed value, and the third estimated vehicle speed value.

Exemplarily, for each vehicle speed estimation path, if a determination condition for a corresponding vehicle speed estimation path is not triggered, no result is output. The motor controller directly takes an estimated vehicle speed value of a path that can output a result as the reference vehicle speed of the vehicle at the current moment. Meanwhile, to avoid a problem of multiple paths being triggered simultaneously and outputting multiple results, combined with the conditions targeted by each path, the embodiment can set the priority of the three estimation paths. Priority of the path corresponding to the second estimated vehicle speed value is set higher than priority of the path corresponding to the first estimated vehicle speed value, and priority of the path corresponding to the first estimated vehicle speed value is set higher than priority of the path corresponding to the third estimated vehicle speed value, thereby improving the accuracy of vehicle speed estimation when the vehicle is under different slipping conditions.

The above method can distinguish the conditions of speed-separation slipping and dual-axle slipping, select different calculation rules to estimate the vehicle speed under different slipping conditions, avoiding a problem that traditional methods such as an extreme value method and a mean value method can not handle a complex condition. Meanwhile, Acceleration integration is introduced to correct a vehicle speed change during slipping, reducing a problem of overestimation or underestimation of wheel speed caused by slipping, and improving the accuracy of vehicle speed estimation.

In a possible implementation manner, a specific implementation process of S101 includes following steps.
Acquiring the front axle speed at the current moment, and deriving the front axle speed at the current moment to obtain a front axle acceleration;
Acquiring the rear axle speed at the current moment, and deriving the rear axle speed at the current moment to obtain a rear axle acceleration;
Determining, if the front axle acceleration is greater than a calibrated acceleration value, the front axle to be in the slipping state; and
Determining, if the rear axle acceleration is greater than the calibrated acceleration value, the rear axle to be in the slipping state.

In the embodiment, the front axle speed can be obtained according to the aforementioned specific method of S101, and the rear axle speed can be obtained by the aforementioned specific method of S102. The methods for obtaining the front axle speed and the rear axle speed are not be repeated herein. After the front axle acceleration and the rear axle acceleration are obtained, the motor controller can further determine the acceleration calibration value based on a road surface type. The acceleration calibration value differs for different road surface types. For example, an acceleration calibration value for an icy or snowy road is less than an acceleration calibration value for a concrete road.

Exemplarily, to determine the road surface type, a vehicle-mounted camera can be used to capture an image of a road surface texture of a road to be traveled by the vehicle. Then, image recognition is performed on the image of the road surface texture to obtain the road surface type. Furthermore, while the image of the road surface texture is used for road type recognition, road surface type recognition can further be assisted based on a wheel speed fluctuation characteristic.

It can be learned from the foregoing embodiment that, compared with a threshold determination method based on a vehicle speed, the method of determining slip based on acceleration according to the embodiment can capture a slip timing more accurately, thereby improving the accuracy of vehicle speed estimation.

In a possible implementation, a specific implementation process of S102 includes the following steps.
Taking a front axle speed at a moment before both the front axle and the rear axle are simultaneously detected to enter the slipping state as a current front axle speed;
Taking a rear axle speed at the moment before both the front axle and the rear axle are simultaneously detected to enter the slipping state as a current rear axle speed;
Selecting a less value between the current front axle speed and the current rear axle speed as a target vehicle speed;
Integrating the current vehicle body acceleration over a first preset duration to obtain a first cumulative change speed; wherein the first preset duration is a time interval between the current moment and a moment at which both the front axle and the rear axle are simultaneously detected to enter the slipping state; and

Adding the target vehicle speed and the first cumulative change speed to obtain the first estimated vehicle speed value.

In the embodiment, under the dual-axle slipping state, after a first cumulative change speed for the current time is calculated, if a slip duration exceeds a preset time threshold, the acceleration integration is corrected based on a decay function to suppress long-term integration drift.

Exemplarily, a calculation formula for the first cumulative change speed value after the dual-axle slipping state is entered is as follows.$\left\{\begin{matrix}Δ ν = \int a \left(t\right) dt & Δt < {t}_{0} \\ Δ ν = {e}^{- \frac{Δ t}{10}} \int a \left(t\right) dt & Δt \geq {t}_{0}\end{matrix}\right.$

In the formula, *t*₀ represents a preset time threshold, and Δ*t* represents a duration of being in the dual-axle slipping state. The preset time threshold may range from 5 seconds to 10 seconds.

After the first cumulative change speed value is calculated, the first cumulative change speed value is added to a reference vehicle speed at a moment immediately before the dual-axle slipping condition is entered to obtain the first estimated vehicle speed value.

Similarly, to avoid a calculation deviation, when an absolute value of the vehicle body acceleration is detected to be less than a preset acceleration threshold, the vehicle is considered to be in a uniform speed state or a low acceleration state. A reference vehicle speed before slipping is directly used as an estimated value for the current vehicle speed. Exemplarily, the preset acceleration threshold can be 0.1 m/s².

As another specific embodiment, the above specific implementation process of S102 includes following steps.
Taking a front axle speed at a moment before both the front axle and the rear axle are simultaneously detected to enter the slipping state as a current front axle speed;
Taking a rear axle speed at the moment before both the front axle and the rear axle are simultaneously detected to enter the slipping state as a current rear axle speed;
Selecting a less value between the current front axle speed and the current rear axle speed as a target vehicle speed;
Integrating the current vehicle body acceleration over a first preset duration to obtain a first cumulative change speed; wherein the first preset duration is a time interval between the current moment and a moment at which both the front axle and the rear axle are simultaneously detected to enter the slipping state;
Taking, if an absolute value of the current vehicle body acceleration is greater than a first acceleration threshold, a first numerical value as a first weight; Taking, if the absolute value of the current vehicle body acceleration is less than a second acceleration threshold, a second numerical value as the first weight; multiplying the first weight by the first cumulative change speed to obtain a corrected first cumulative change speed; and

Adding the target vehicle speed and the corrected first cumulative change speed to obtain the first estimated vehicle speed value.

Specifically, a vehicle body acceleration sensor has zero-bias error, dynamic response delay, and high-frequency noise. When the acceleration value is large, a traditional pure integration method has a large cumulative error. Therefore, a first numerical value can be used to correct the cumulative change speed when the absolute value of the current vehicle body acceleration is greater than the first acceleration threshold, reducing the overestimated cumulative change speed. When the absolute value of the current vehicle body acceleration is less than the second acceleration threshold, the vehicle is indicated to be close to a steady state, so the second numerical value may be directly set to zero. The first acceleration threshold may be 0.3G, and the second acceleration threshold may be 0.1G. The first numerical value may range from 0.7 to 0.9. Exemplarily, the first numerical value may be 0.8. When the absolute value of the current vehicle body acceleration is greater than or equal to the second acceleration threshold and less than or equal to the first acceleration threshold, the value of the first weight is set to 1.

In a possible implementation, a specific implementation process of integrating the current vehicle body acceleration over a first preset duration to obtain a first cumulative change speed in S102 includes a following step.

Freezing, if the vehicle is detected to be in a steering condition, the first cumulative change speed at a previous moment. The steering condition can be determined based on a steering wheel angle. When the steering wheel angle is greater than a preset angle, or when a change rate of the steering wheel angle is greater than a preset angle change rate, the vehicle is determined to be in the steering condition.

Specifically, when the vehicle is in the steering condition, a vehicle longitudinal acceleration collected by the vehicle body acceleration sensor includes an actual vehicle longitudinal acceleration and a projection of a vehicle lateral acceleration onto a vehicle longitudinal direction. The collected vehicle longitudinal acceleration is caused to be artificially high. At the same time, a lateral force on the wheel increases during steering, so that an upper limit of available longitudinal force is reduced. Therefore, to avoid a large error caused by vehicle body acceleration during the steering condition, the first cumulative change speed during the steering condition is frozen until the steering is completed.

According to the foregoing embodiment, since a stable wheel speed before slipping corresponds more closely to the actual vehicle speed, the front axle speed and the rear axle speed at the moment immediately before the moment when both the front axle and the rear axle are determined to be in the slipping state may be locked. A large deviation in speed estimation caused by selecting an artificially high wheel speed due to slip is avoided. Meanwhile, integrating the current vehicle body acceleration allows real-time adjustment of the vehicle speed during the slipping state, further improving the accuracy of vehicle speed estimation.

In a possible implementation, a specific implementation process of S103 includes following steps.
Taking a front axle speed at a moment before the vehicle enters a speed-separation slipping condition as a current front axle speed; wherein the speed-separation slipping condition is a condition in which one of the front axle and the rear axle is in the slipping state at the current moment, and the difference between the front axle speed and the rear axle speed is greater than the preset threshold;
Taking a rear axle speed at the moment before the vehicle enters the speed-separation slipping condition as a current rear axle speed;
Averaging the current front axle speed and the current rear axle speed to obtain a current average vehicle speed;
Integrating the current vehicle body acceleration over a second preset duration to obtain a second cumulative change speed; wherein the second preset duration is a time interval between the current moment and a moment at which one of the front axle and the rear axle is detected to enter the slipping state; and
Adding the current average vehicle speed and the second cumulative change speed to obtain the second estimated vehicle speed value.

In the embodiment, considering load distribution characteristics of a front-wheel drive vehicle and a rear-wheel drive vehicle, after the current front axle speed and the current rear axle speed are obtained, a weighted summation is performed on the current front axle speed and the current rear axle speed to obtain the current average vehicle speed. The sum of a weight of the current front axle speed and a weight of the current rear axle speed is 1. A weight ratio of the current front axle speed and the current rear axle speed is determined based on the drive mode of the vehicle.

Specifically, in the front-wheel drive vehicle during acceleration, a center of gravity shifts rearward, reducing adhesion of the front wheel. However, a driving torque is mainly transmitted by the front wheel, so a correlation coefficient between the front wheel speed and the actual vehicle speed is high, while a correlation coefficient between the rear wheel speed and the actual vehicle speed is low. Therefore, when the vehicle is a front-wheel drive vehicle, the weight of the current front axle speed is set to be greater than the weight of the current rear axle speed. When the vehicle is a rear-wheel drive vehicle, the weight of the current front axle speed is set to be less than the weight of the current rear axle speed. When the vehicle is a four-wheel drive vehicle, the weight of the current front axle speed is set equal to the weight of the current rear axle speed, that is, 0.5:0.5.

In the embodiment, under the speed-separation slipping condition, after a second cumulative change speed value at the current time is calculated, if a slip duration exceeds a preset time threshold, acceleration integration is corrected based on a decay function to suppress long-term integration drift.

Exemplarily, a calculation formula for the second cumulative change speed value after the speed-separation slipping condition is entered is as follows.$\left\{\begin{matrix}Δ ν = \int a \left(t\right) dt & Δt < {t}_{0} \\ Δ ν = {e}^{- \frac{Δ t}{10}} \int a \left(t\right) dt & Δt \geq {t}_{0}\end{matrix}\right.$

In the formula, *t*₀ represents a preset time threshold, and Δ*t* represents a duration of being in speed-separation slipping condition. The preset time threshold may range from 5 seconds to 10 seconds.

Similarly, to avoid a calculation deviation, when an absolute value of the vehicle body acceleration is detected to be less than a preset acceleration threshold, the vehicle is considered to be in a uniform speed state or a low acceleration state. A reference vehicle speed before slipping is directly used as an estimated value for the current vehicle speed. Exemplarily, the preset acceleration threshold can be 0.1 m/s².

As another specific embodiment, a specific implementation process of the above S103 includes following steps.
Taking a front axle speed at a moment before the vehicle enters a speed-separation slipping condition as a current front axle speed; wherein the speed-separation slipping condition is a condition in which one of the front axle and the rear axle is in the slipping state at the current moment, and the difference between the front axle speed and the rear axle speed is greater than the preset threshold;
Taking a rear axle speed at the moment before the vehicle enters the speed-separation slipping condition as a current rear axle speed;
Averaging the current front axle speed and the current rear axle speed to obtain a current average vehicle speed;
Integrating the current vehicle body acceleration over a second preset duration to obtain a second cumulative change speed; wherein the second preset duration is a time interval between the current moment and a moment at which one of the front axle and the rear axle is detected to enter the slipping state;
Taking, if an absolute value of the current vehicle body acceleration is greater than a first acceleration threshold, a first numerical value as a second weight; Taking, if the absolute value of the current vehicle body acceleration is less than a second acceleration threshold, a second numerical value as the second weight; Multiplying the second weight by the second cumulative change speed to obtain a corrected second cumulative change speed; and

Adding the current average vehicle speed and the corrected second cumulative change speed to obtain the second estimated vehicle speed value.

In a possible implementation, a specific implementation process of integrating the current vehicle body acceleration over a second preset duration to obtain a second cumulative change speed in S103 includes a following step.

Freezing, if the vehicle is detected to be in a steering condition, the second cumulative change speed at a previous moment. The steering condition can be determined based on a steering wheel angle. When the steering wheel angle is greater than a preset angle, or when a change rate of the steering wheel angle is greater than a preset angle change rate, the vehicle is determined to be in the steering condition.

Specifically, to avoid a large error caused by vehicle body acceleration during the steering condition, the second cumulative change speed during the steering condition is frozen until the steering is completed.

According to the foregoing embodiment, for the speed-separation slipping condition in which speed separation occurs, at a moment when at least one of the front axle and the rear axle is determined to be slipping, the front axle speed and the rear axle speed, at a moment immediately before the moment when at least one of the front axle and the rear axle is determined to be slipping, may be locked. A large deviation caused by selecting an artificially high wheel speed after slip is avoided. Furthermore, since speed separation occurs under the speed-separation slipping condition, an extreme value deviation caused by speed-separation slipping is eliminated by using the average vehicle speed. Meanwhile, integrating the current vehicle body acceleration allows real-time adjustment of the vehicle speed during the slipping state, further improving the accuracy of vehicle speed estimation.

In a possible implementation, a specific implementation process of S101 includes a following step.

Calculating, if both the front axle of the vehicle and the rear axle of the vehicle are in the slipping state at the current moment, the first estimated vehicle speed value based on the vehicle speed before the slipping state and the current vehicle body acceleration, otherwise, taking a first preset speed as the first estimated vehicle speed value; wherein the first preset speed is greater than an upper speed limit of the vehicle.

A specific implementation process of S103 includes a following step.

Calculating, if one of the front axle of the vehicle and the rear axle of the vehicle is in the slipping state at the current moment, and the difference between the front axle speed and the rear axle speed is greater than the preset threshold, the second estimated vehicle speed value based on the front axle speed, the rear axle speed, and the current vehicle body acceleration, otherwise, taking a second preset speed as the second estimated vehicle speed value; wherein the second preset speed is greater than the upper speed limit of the vehicle.

Exemplarily, the first preset speed may be a high speed unattainable by the vehicle. For example, the first preset speed equals 300 km/h. Exemplarily, the second preset speed can also be a high speed unattainable by the vehicle. For example, the second preset speed equals 300 km/h. The second preset speed may be equal to or different from the first preset speed. A specific value of the second preset speed may be set according to an actual requirement.

In the embodiment, to improve system reliability, when a condition for the dual-axle slip speed estimation path is not met and when a condition for the speed-separation slip speed estimation path is not met, an artificially high estimated speed value is output. In this way, the motor controller can subsequently take the minimum value among the first estimated vehicle speed value, the second estimated vehicle speed value, and the third estimated vehicle speed value, thereby outputting an actual estimated vehicle speed value.

The foregoing embodiment provides a protection mechanism for the dual-axle condition and the speed-separation slipping condition. When the condition requirements are not met, the corresponding estimated value is set as an invalid value, avoiding wrong application of compensation algorithm under a non-slipping condition. Meanwhile, invalidation can avoid a conflict with an actual wheel speed, effectively improve system reliability and reduce an accident risk caused by algorithm failure.

In a possible implementation, a specific implementation process of S105 includes a following step.

Selecting a minimum value among the first estimated vehicle speed value, the second estimated vehicle speed value, and the third estimated vehicle speed value as the reference vehicle speed of the vehicle at the current moment.

According to the foregoing embodiment, to meet a safety-first strategy of a TCS, the minimum of the three estimation results is ultimately taken as an estimated vehicle speed value. The calculated reference vehicle speed is used for slip rate calculation, avoiding distortion in slip ratio calculation due to vehicle speed overestimation, thereby effectively controlling a stable state of the vehicle and enhancing system safety. Additionally, compared to an ESC, the method according to the embodiment can be applied to the motor controller, to process a signal in the motor controller, so that signal transmission time between multiple controllers is reduced, and a vehicle body state is calculated earlier.

It should be understood that the sequence numbers of the steps in the foregoing embodiments does not imply an order of execution. The execution order of each process should be determined by function and inherent logic of the steps, and should not constitute any limitation on the implementation process of the embodiments of the present application.

The following is a device embodiment of the present application. For details not elaborated therein, reference may be made to the corresponding method embodiments above.

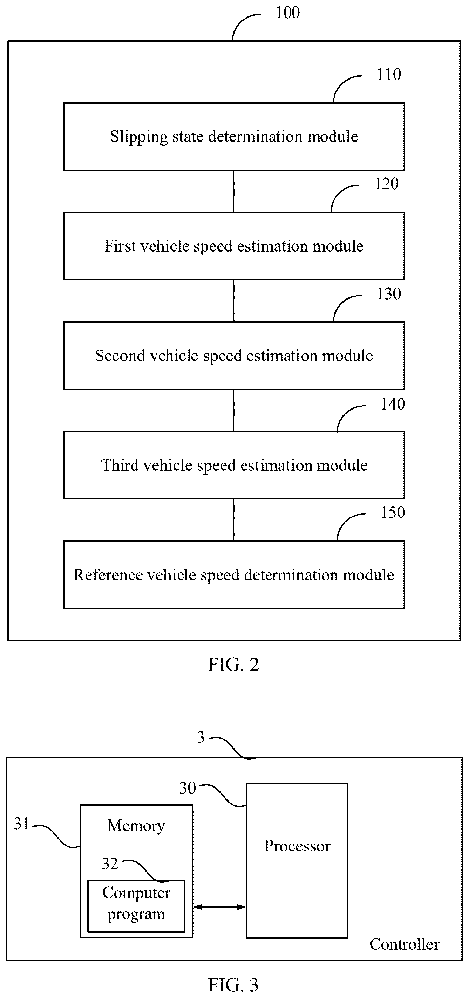

FIG. 2 shows a schematic structural diagram of a device for estimating a vehicle speed according to an embodiment of the present application. For ease of explanation, only parts related to the embodiment of the present application are shown, and the details are as follows.

As shown in FIG. 2, a device 100 for estimating a vehicle speed includes a slipping state determination module 110, a first vehicle speed estimation module 120, a second vehicle speed estimation module 130, a third vehicle speed estimation module 140, and a reference vehicle speed determination module 150.

The slipping state determination module 110 is configured to determine whether a front axle of a vehicle and a rear axle of the vehicle are in a slipping state at a current moment.

The first vehicle speed estimation module 120 is configured to calculate, if both the front axle of the vehicle and the rear axle of the vehicle are in the slipping state at the current moment, a first estimated vehicle speed value based on a vehicle speed before the slipping state and a current vehicle body acceleration.

The second vehicle speed estimation module 130 is configured to calculate, if one of the front axle of the vehicle and the rear axle of the vehicle is in the slipping state at the current moment, and a difference between a front axle speed and a rear axle speed is greater than a preset threshold, a second estimated vehicle speed value based on the front axle speed, the rear axle speed, and the current vehicle body acceleration.

The third vehicle speed estimation module 140 is configured to select a less value between the front axle speed and the rear axle speed of the vehicle at the current moment as a third estimated vehicle speed value.

The reference vehicle speed determination module 150 is configured to determine a reference vehicle speed of the vehicle at the current moment based on the first estimated vehicle speed value, the second estimated vehicle speed value, and the third estimated vehicle speed value.

In a possible implementation, the slipping state determination module 110 is further configured to
acquire the front axle speed at the current moment, and deriving the front axle speed at the current moment to obtain a front axle acceleration;
acquire the rear axle speed at the current moment, and deriving the rear axle speed at the current moment to obtain a rear axle acceleration;
determine, if the front axle acceleration is greater than a calibrated acceleration value, the front axle to be in the slipping state; and
determine, if the rear axle acceleration is greater than the calibrated acceleration value, the rear axle to be in the slipping state.

In a possible implementation, the first vehicle speed estimation module 120 is further configured to
take a front axle speed at a moment before both the front axle and the rear axle are simultaneously detected to enter the slipping state as a current front axle speed;
take a rear axle speed at the moment before both the front axle and the rear axle are simultaneously detected to enter the slipping state as a current rear axle speed;
select a less value between the current front axle speed and the current rear axle speed as a target vehicle speed;
integrate the current vehicle body acceleration over a first preset duration to obtain a first cumulative change speed; wherein the first preset duration is a time interval between the current moment and a moment at which both the front axle and the rear axle are simultaneously detected to enter the slipping state; and
add the target vehicle speed and the first cumulative change speed to obtain the first estimated vehicle speed value.

In a possible implementation, the second vehicle speed estimation module 130 is further configured to
take a front axle speed at a moment before the vehicle enters a speed-separation slipping condition as a current front axle speed; wherein the speed-separation slipping condition is a condition in which one of the front axle and the rear axle is in the slipping state at the current moment, and the difference between the front axle speed and the rear axle speed is greater than the preset threshold;
take a rear axle speed at the moment before the vehicle enters the speed-separation slipping condition as a current rear axle speed;
average the current front axle speed and the current rear axle speed to obtain a current average vehicle speed;
integrate the current vehicle body acceleration over a second preset duration to obtain a second cumulative change speed; wherein the second preset duration is a time interval between the current moment and a moment at which one of the front axle and the rear axle is detected to enter the slipping state; and
add the current average vehicle speed and the second cumulative change speed to obtain the second estimated vehicle speed value.

In a possible implementation, the first vehicle speed estimation module 120 is further configured to
calculate, if both the front axle of the vehicle and the rear axle of the vehicle are in the slipping state at the current moment, the first estimated vehicle speed value based on the vehicle speed before the slipping state and the current vehicle body acceleration, otherwise, taking a first preset speed as the first estimated vehicle speed value; wherein the first preset speed is greater than an upper speed limit of the vehicle.

The second vehicle speed estimation module 130 is further configured to
calculate, if one of the front axle of the vehicle and the rear axle of the vehicle is in the slipping state at the current moment, and the difference between the front axle speed and the rear axle speed is greater than the preset threshold, the second estimated vehicle speed value based on the front axle speed, the rear axle speed, and the current vehicle body acceleration, otherwise, taking a second preset speed as the second estimated vehicle speed value; wherein the second preset speed is greater than the upper speed limit of the vehicle.

In a possible implementation, the reference vehicle speed determination module 150 is further configured to
select a minimum value among the first estimated vehicle speed value, the second estimated vehicle speed value, and the third estimated vehicle speed value as the reference vehicle speed of the vehicle at the current moment.

An embodiment of the present application further provides a computer program product. The computer program product has program code. When the program code is run on a corresponding processor, a controller, a computing device, or a terminal, the steps in any of the above method embodiments for estimating a vehicle speed (for example, Step S101 to Step S105 shown in FIG. 1) are executed. Those skilled in the art should understand that the methods and related devices proposed in the embodiments of the present application can be implemented in various forms of a hardware, a software, a firmware, a special-purpose processor, or a combination thereof. The special-purpose processors may include an application specific integrated circuit (ASIC), a reduced instruction set computer (RISC), and/or a field programmable gate arrays (FPGA). The proposed method and device are preferably implemented as a combination of hardware and software. The software is preferably installed as an application on a program storage device. It is typically based on a hardware computer platform having machines such as one or more central processing unit (CPU), random access memory (RAM), and one or more input/output (I/O) interface. An operating system is also typically installed on the computer platform. The various processes and functions described herein may be part of an application, or a portion thereof may be performed by the operating system.

FIG. 3 is a schematic diagram of a controller according to an embodiment of the present application. As shown in FIG. 3, a controller 3 according to the embodiment includes a processor 30, a memory 31, and a computer program 32 stored in the memory 31 and executable on the processor 30. When the processor 30 executes the computer program 32, the steps in the various method embodiments for estimating the vehicle speed described above (for example, Step S101 to Step S105 shown in FIG. 1) are implemented. Alternatively, when the processor 30 executes the computer program 32, functions of the modules/units in the various device embodiments described above (for example, the functions of module 110 to module 150 shown in FIG. 2) are implemented.

Exemplarily, the computer program 32 may be divided into one or more modules/units. The modules/units are stored in the memory 31 and executed by the processor 30 to complete/implement the solution provided by the present application. The one or more modules/units may be a series of computer program instruction segments capable of performing specific functions, and the instruction segments are used to describe the execution process of the computer program 32 in the controller 3. For example, the computer program 32 may be divided into module 110 to module 150 shown in FIG. 2.

The controller 3 may include, but is not limited to, the processor 30 and the memory 31. Those skilled in the art can understand that FIG. 3 is only an example of the controller 3 and does not constitute a limitation on the controller 3. The controller 3 may include more or fewer components than shown, or combine some components, or have different components. For example, the controller 3 may further include an input/output device, a network access device, a bus, and the like.

The processor 30 may be a central processing unit (CPU), or other general-purpose processors, digital signal processors (DSPs), application specific integrated circuits (ASICs), fieldprogrammable gate arrays (FPGAs), or other programmable logic devices, discrete gate or transistor logic devices, discrete hardware components, and the like. A general-purpose processor may be a microprocessor or any conventional processor, and the like.

The memory 31 may be an internal storage unit of the controller 3, such as a hard disk or memory of the controller 3. The memory 31 may alternatively be an external storage device of the controller 3, such as a plug-in hard disk, a smart media card (SMC), a secure digital (SD) card, a flash card, and the like, provided on the controller 3. Further, the memory 31 may alternatively include both an internal storage unit of the controller 3 and an external storage device. The memory 31 is used to store the computer program and other programs and data required by the terminal. The memory 31 may alternatively be used to temporarily store data that has been output or is to be output.

Those skilled in the art can clearly understand that, for the convenience and conciseness of description, the division of the above functional units and modules is only used as an illustration. In a practical application, the above functions can be allocated to different functional units or modules as needed. That is, the internal structure of the device can be divided into different functional units or modules to complete all or part of the functions described above. The functional units and modules in the embodiments can be integrated into one processing unit, or each unit can exist physically separately, or two or more units can be integrated into one unit. The above-mentioned integrated units can be implemented in the form of hardware or in the form of software functional units. In addition, the specific names of the functional units and modules are only for the convenience of distinguishing each other and are not intended to limit the scope of protection of the present application. For the specific working process of the units and modules in the above system, reference may be made to the corresponding process in the foregoing method embodiments, and details are not repeated here.

In the foregoing embodiments, the description of each embodiment has its own emphasis. For parts not described or recorded in detail in a particular embodiment, reference may be made to the related descriptions of other embodiments.

Those of ordinary skill in the art appreciate that the units and algorithm steps of the examples described in conjunction with the embodiments disclosed herein can be implemented in electronic hardware, or a combination of computer software and electronic hardware. Whether the functions are performed in hardware or software depends on the specific application and design constraints of the technical solution. A professional may use different methods to implement the described functions for each specific application, but such implementation should not be considered beyond the scope of the present application.

In the embodiments provided in the present application, it should be understood that the disclosed device/terminal and method may be implemented in other ways. For example, the device/terminal embodiments described above are only illustrative. For example, the division of modules or units is only a logical function division, and there may be other divisions in actual implementation, for example, multiple units or components may be combined or integrated into another system, or some features may be omitted or not implemented. On the other hand, the mutual coupling or direct coupling or communication connection shown or discussed may be through some interfaces, indirect coupling or communication connection of devices or units, which may be in electrical, mechanical, or other forms.

The units described as separate components may or may not be physically separate. Components displayed as units may or may not be physical units. That is, the units may be located in one place or distributed over multiple network units. Some or all of the units may be selected according to actual needs to achieve the objectives of the solution of the embodiment.

In addition, each functional unit in each embodiment of the present application may be integrated into one processing unit, or each unit may exist physically separately, or two or more units may be integrated into one unit. The above-mentioned integrated units can be implemented in the form of hardware or in the form of software functional units.

If the integrated module/unit is implemented in the form of a software functional unit and sold or used as an independent product, the integrated module/unit may be stored in a computer-readable storage medium. Based on this understanding, all or part of the processes in the methods of the foregoing embodiments of the present application can alternatively be implemented by instructing relevant hardware through a computer program. The computer program can be stored in a computer-readable storage medium. When the computer program is executed by a processor, the steps of the various method embodiments for estimating a vehicle speed described above can be implemented. The computer program includes computer program code. The computer program code may be in source code form, object code form, executable file form, some intermediate form, or the like. The computer-readable medium may include any entity, device, recording medium, USB flash drive, mobile hard disk, magnetic disk, optical disk, computer memory, read-only memory (ROM), random access memory (RAM), electrical carrier signal, telecommunication signal, software distribution media, and the like, capable of carrying the computer program code. It should be noted that the content contained in the computer-readable medium may be appropriately increased or decreased according to the requirements of legislation and patent practice in the jurisdiction. For example, in some jurisdictions, according to legislation and patent practice, computer-readable media do not include electrical carrier signals and telecommunication signals.

Furthermore, features of the embodiments shown in the drawings of the present application or mentioned in various embodiments in the specification are not necessarily to be understood as independent embodiments. Rather, each feature described in one example of an embodiment can be combined with one or more other desired features from other embodiments, resulting in other embodiments not described in words or with reference to the drawings.

The foregoing embodiments are only used to illustrate the technical solutions of the present application, not to limit them; although the present application has been described in detail with reference to the foregoing embodiments, those of ordinary skill in the art should understand that they can still modify the technical solutions described in the foregoing embodiments, or perform equivalent replacements on some of the technical features. These modifications or replacements do not make the essence of the corresponding technical solutions depart from the spirit and scope of the technical solutions of the embodiments of the present application, and should be included within the scope of protection of the present application.

## Claims

1. A method for estimating a vehicle speed, comprising:
determining whether a front axle of a vehicle and a rear axle of the vehicle are in a slipping state at a current moment;
calculating, if both the front axle of the vehicle and the rear axle of the vehicle are in the slipping state at the current moment, a first estimated vehicle speed value based on a vehicle speed before the slipping state and a current vehicle body acceleration;
calculating, if one of the front axle of the vehicle and the rear axle of the vehicle is in the slipping state at the current moment, and a difference between a front axle speed and a rear axle speed is greater than a preset threshold, a second estimated vehicle speed value based on the front axle speed, the rear axle speed, and the current vehicle body acceleration;
selecting a less value between the front axle speed and the rear axle speed of the vehicle at the current moment as a third estimated vehicle speed value; and
determining a reference vehicle speed of the vehicle at the current moment based on the first estimated vehicle speed value, the second estimated vehicle speed value, and the third estimated vehicle speed value.

2. The method for estimating the vehicle speed according to claim 1, wherein the determining whether a front axle of a vehicle and a rear axle of the vehicle are in a slipping state at a current moment, comprises:
acquiring the front axle speed at the current moment, and deriving the front axle speed at the current moment to obtain a front axle acceleration;
acquiring the rear axle speed at the current moment, and deriving the rear axle speed at the current moment to obtain a rear axle acceleration;
determining, if the front axle acceleration is greater than a calibrated acceleration value, the front axle to be in the slipping state; and
determining, if the rear axle acceleration is greater than the calibrated acceleration value, the rear axle to be in the slipping state.

3. The method for estimating the vehicle speed according to claim 1, wherein the calculating a first estimated vehicle speed value based on a vehicle speed before the slipping state and a current vehicle body acceleration, comprises:
taking a front axle speed at a moment before both the front axle and the rear axle are simultaneously detected to enter the slipping state as a current front axle speed;
taking a rear axle speed at the moment before both the front axle and the rear axle are simultaneously detected to enter the slipping state as a current rear axle speed;
selecting a less value between the current front axle speed and the current rear axle speed as a target vehicle speed;
integrating the current vehicle body acceleration over a first preset duration to obtain a first cumulative change speed; wherein the first preset duration is a time interval between the current moment and a moment at which both the front axle and the rear axle are simultaneously detected to enter the slipping state; and
adding the target vehicle speed and the first cumulative change speed to obtain the first estimated vehicle speed value.

4. The method for estimating the vehicle speed according to claim 1, wherein the calculating a second estimated vehicle speed value based on the front axle speed, the rear axle speed, and the current vehicle body acceleration, comprises:
taking a front axle speed at a moment before the vehicle enters a speed-separation slipping condition as a current front axle speed; wherein the speed-separation slipping condition is a condition in which one of the front axle and the rear axle is in the slipping state at the current moment, and the difference between the front axle speed and the rear axle speed is greater than the preset threshold;
taking a rear axle speed at the moment before the vehicle enters the speed-separation slipping condition as a current rear axle speed;
averaging the current front axle speed and the current rear axle speed to obtain a current average vehicle speed;
integrating the current vehicle body acceleration over a second preset duration to obtain a second cumulative change speed; wherein the second preset duration is a time interval between the current moment and a moment at which one of the front axle and the rear axle is detected to enter the slipping state; and
adding the current average vehicle speed and the second cumulative change speed to obtain the second estimated vehicle speed value.

5. The method for estimating the vehicle speed according to claim 1, wherein the calculating, if both the front axle of the vehicle and the rear axle of the vehicle are in the slipping state at the current moment, a first estimated vehicle speed value based on a vehicle speed before the slipping state and a current vehicle body acceleration, comprises:
calculating, if both the front axle of the vehicle and the rear axle of the vehicle are in the slipping state at the current moment, the first estimated vehicle speed value based on the vehicle speed before the slipping state and the current vehicle body acceleration, otherwise, taking a first preset speed as the first estimated vehicle speed value; wherein the first preset speed is greater than an upper speed limit of the vehicle; and
the calculating, if one of the front axle of the vehicle and the rear axle of the vehicle is in the slipping state at the current moment, and a difference between a front axle speed and a rear axle speed is greater than a preset threshold, a second estimated vehicle speed value based on the front axle speed, the rear axle speed, and the current vehicle body acceleration, comprises:
calculating, if one of the front axle of the vehicle and the rear axle of the vehicle is in the slipping state at the current moment, and the difference between the front axle speed and the rear axle speed is greater than the preset threshold, the second estimated vehicle speed value based on the front axle speed, the rear axle speed, and the current vehicle body acceleration, otherwise, taking a second preset speed as the second estimated vehicle speed value; wherein the second preset speed is greater than the upper speed limit of the vehicle.

6. The method for estimating the vehicle speed according to claim 1, wherein the determining a reference vehicle speed of the vehicle at the current moment based on the first estimated vehicle speed value, the second estimated vehicle speed value, and the third estimated vehicle speed value, comprises:
selecting a minimum value among the first estimated vehicle speed value, the second estimated vehicle speed value, and the third estimated vehicle speed value as the reference vehicle speed of the vehicle at the current moment.

7. A device for estimating a vehicle speed, comprising:
a slipping state determination module, configured to determine whether a front axle of a vehicle and a rear axle of the vehicle are in a slipping state at a current moment;
a first vehicle speed estimation module, configured to calculate, if both the front axle of the vehicle and the rear axle of the vehicle are in the slipping state at the current moment, a first estimated vehicle speed value based on a vehicle speed before the slipping state and a current vehicle body acceleration;
a second vehicle speed estimation module, configured to calculate, if one of the front axle of the vehicle and the rear axle of the vehicle is in the slipping state at the current moment, and a difference between a front axle speed and a rear axle speed is greater than a preset threshold, a second estimated vehicle speed value based on the front axle speed, the rear axle speed, and the current vehicle body acceleration;
a third vehicle speed estimation module, configured to select a less value between the front axle speed and the rear axle speed of the vehicle at the current moment as a third estimated vehicle speed value; and
a reference vehicle speed determination module, configured to determine a reference vehicle speed of the vehicle at the current moment based on the first estimated vehicle speed value, the second estimated vehicle speed value, and the third estimated vehicle speed value.

8. The device for estimating the vehicle speed according to claim 7, wherein the slipping state determination module is further configured to
acquire the front axle speed at the current moment, and deriving the front axle speed at the current moment to obtain a front axle acceleration;
acquire the rear axle speed at the current moment, and deriving the rear axle speed at the current moment to obtain a rear axle acceleration;
determine, if the front axle acceleration is greater than a calibrated acceleration value, the front axle to be in the slipping state; and
determine, if the rear axle acceleration is greater than the calibrated acceleration value, the rear axle to be in the slipping state.

9. The device for estimating the vehicle speed according to claim 7, wherein the first vehicle speed estimation module is further configured to
take a front axle speed at a moment before both the front axle and the rear axle are simultaneously detected to enter the slipping state as a current front axle speed;
take a rear axle speed at the moment before both the front axle and the rear axle are simultaneously detected to enter the slipping state as a current rear axle speed;
select a less value between the current front axle speed and the current rear axle speed as a target vehicle speed;
integrate the current vehicle body acceleration over a first preset duration to obtain a first cumulative change speed; wherein the first preset duration is a time interval between the current moment and a moment at which both the front axle and the rear axle are simultaneously detected to enter the slipping state; and
add the target vehicle speed and the first cumulative change speed to obtain the first estimated vehicle speed value.

10. The device for estimating the vehicle speed according to claim 7, wherein the second vehicle speed estimation module is further configured to
take a front axle speed at a moment before the vehicle enters a speed-separation slipping condition as a current front axle speed; wherein the speed-separation slipping condition is a condition in which one of the front axle and the rear axle is in the slipping state at the current moment, and the difference between the front axle speed and the rear axle speed is greater than the preset threshold;
take a rear axle speed at the moment before the vehicle enters the speed-separation slipping condition as a current rear axle speed;
average the current front axle speed and the current rear axle speed to obtain a current average vehicle speed;
integrate the current vehicle body acceleration over a second preset duration to obtain a second cumulative change speed; wherein the second preset duration is a time interval between the current moment and a moment at which one of the front axle and the rear axle is detected to enter the slipping state; and
add the current average vehicle speed and the second cumulative change speed to obtain the second estimated vehicle speed value.

11. The device for estimating the vehicle speed according to claim 7, wherein the first vehicle speed estimation module is further configured to
calculate, if both the front axle of the vehicle and the rear axle of the vehicle are in the slipping state at the current moment, the first estimated vehicle speed value based on the vehicle speed before the slipping state and the current vehicle body acceleration, otherwise, taking a first preset speed as the first estimated vehicle speed value; wherein the first preset speed is greater than an upper speed limit of the vehicle; and
the second vehicle speed estimation module is further configured to
calculate, if one of the front axle of the vehicle and the rear axle of the vehicle is in the slipping state at the current moment, and the difference between the front axle speed and the rear axle speed is greater than the preset threshold, the second estimated vehicle speed value based on the front axle speed, the rear axle speed, and the current vehicle body acceleration, otherwise, taking a second preset speed as the second estimated vehicle speed value; wherein the second preset speed is greater than the upper speed limit of the vehicle.

12. The device for estimating the vehicle speed according to claim 7, wherein the reference vehicle speed determination module is further configured to
select a minimum value among the first estimated vehicle speed value, the second estimated vehicle speed value, and the third estimated vehicle speed value as the reference vehicle speed of the vehicle at the current moment.

13. A controller, comprising a memory, a processor, and a computer program stored in the memory and executable on the processor, wherein when the processor executes the computer program, steps of the method for estimating the vehicle speed according to any one of claims 1 to 6 are implemented.

14. A computer-readable storage medium, storing a computer program, wherein when the computer program is executed by a processor, steps of the method for estimating the vehicle speed according to any one of claims 1 to 6 are implemented.

15. A vehicle, comprising: the controller according to claim 13.
